# EUROPÄISCHE PATENTSCHRIFT

(11) **EP 3 530 454 B1**
(45) Veröffentlichungstag und Bekanntmachung des Hinweises auf die Patenterteilung: **10.06.2020**
(21) Anmeldenummer: 18158180.2
(22) Anmeldetag: 22.02.2018
(51) Int. Cl.: B32B 7/12, B32B 27/08, B32B 27/30, B32B 27/32, B32B 27/34, B32B 1/08, F16L 11/00

(54) **MEHRSCHICHTIGE KRAFTFAHRZEUG-ROHRLEITUNG**
MULTILAYER MOTOR VEHICLE PIPELINE
CONDUITE DU VÉHICULE AUTOMOBILE MULTICOUCHE

(43) Veröffentlichungstag der Anmeldung: 28.08.2019
(73) Patentinhaber: TI Automotive (Fuldabrück) GmbH, 34277 Fuldabrück (DE)
(72) Erfinder: ZIMMER, Werner, 34212 Melsungen/Röhrenfurth (DE); FAHRENHOLZ, Frank, 34128 Kassel (DE); ARNOLD, Siegfried, 34128 Kassel (DE); SCHRAMOWSKI, Martin, 34134 Kassel (DE)
(74) Vertreter: Andrejewski - Honke Patent- und Rechtsanwälte Partnerschaft mbB

(56) Entgegenhaltungen:
- EP-A1- 1 362 890
- EP-A1- 2 772 354
- EP-A1- 3 069 865
- DE-A1-102013 114 630

## Beschreibung

Die Erfindung betrifft eine mehrschichtige Kraftfahrzeug-Rohrleitung, insbesondere zur Durchleitung von Kraftstoffen, wobei die Rohrleitung zumindest fünf Schichten aufweist. Die erfindungsgemäße mehrschichtige Kraftfahrzeugrohrleitung wird insbesondere als Kraftstoffrohrleitung in Fahrzeugen eingesetzt. Dabei kann die Kraftfahrzeugrohrleitung auch als Entlüftungsleitung in Tankentlüftungssystemen verwendet werden. In diesem Fall wird die Rohrleitung insbesondere mit Kraftstoffdämpfen und ihren Kondensaten beaufschlagt.

Mehrschichtige Kraftfahrzeug-Rohrleitungen der vorstehend genannten Art sind aus der Praxis in unterschiedlichen Ausführungsformen bekannt. Viele dieser bekannten Rohrleitungen weisen den Nachteil auf, dass die Rohrleitungsschichten beim Durchleiten von Kraftstoffen unerwünschten Auswaschungen von Schichtkomponenten ausgesetzt sind. Das betrifft vor allem die in Kontakt mit dem Kraftstoff stehende Innenschicht, aber auch die angrenzenden mittleren Schichten. Oftmals enthalten die Innenschichten in geringen Mengen Oligomere, die von dem Kraftstoff ausgewaschen werden können und sich dann im Kraftstoffsystem niederschlagen. Dort können sie zu Problemen führen, insbesondere an Düsen und dergleichen. Die bekannten Rohrleitungen lassen im Hinblick auf ihre Kraftstoffbeständigkeit bzw. im Hinblick auf ihre Resistenz gegenüber den Kraftstoffen zu wünschen übrig. Nicht zuletzt aus diesem Grunde genügen auch die Barriereeigenschaften dieser bekannten Rohrleitungen nicht allen Anforderungen. Man hat bereits versucht, dieses Problem durch Variierung der Schichten - insbesondere der Innenschichten - zu lösen. Verbesserungen im Bezug auf unerwünschte Auswaschungen gingen hier aber zu Lasten der mechanischen Widerstandsfähigkeit und/oder der thermischen Resistenz der Rohrleitungen.

Auch sind viele dieser bekannten Rohrleitungen aufgrund der Materialwahl nur kostspielig herstellbar. Das gilt vor allem für Kraftfahrzeugrohrleitungen mit Innenschichten aus Fluorpolymeren, insbesondere aus ETFE. ETFE hat weiterhin den Nachteil, dass es im Brandfall zu gefährlichen bzw. gesundheitsschädlichen Fluorverbindungen führt.

EP 2 772 354 A1 offenbart eine mehrschichtige Kraftfahrzeug-Rohrleitung, insbesondere zur Durchleitung von Kraftstoffen, wobei die Rohrleitung zumindest fünf Schichten aufweist.

DE 10 2013 114630 A1 betrifft ein Auskleidungselement zur Sanierung einer Rohrleitung. Das Auskleidungselement weist eine Trägerschicht auf, auf welche eine Beschichtung aufgebracht sein kann, die gemäß einer Ausführungsform aus einem thermoplastischen Polyurethan besteht.

Demgegenüber liegt der Erfindung das technische Problem zugrunde, eine mehrschichtige Kraftfahrzeug-Rohrleitung der eingangs genannten Art anzugeben, bei der die vorstehend geschilderten Nachteile vermieden werden können, die sowohl eine verbesserte chemische Resistenz bzw. Resistenz gegen Auswaschungen als auch eine ausreichende mechanische Widerstandsfähigkeit sowie eine optimale Resistenz gegenüber verschiedenen Temperaturen, insbesondere höheren Temperaturen aufweist. Außerdem soll diese Rohrleitung möglichst kostengünstig herstellbar sein.

Zur Lösung des technischen Problems lehrt die Erfindung eine mehrschichtige Kraftfahrzeug-Rohrleitung, insbesondere zur Durchleitung von Kraftstoffen, wobei die Rohrleitung zumindest fünf Schichten aufweist und zwar mit folgendem Schichtaufbau von außen nach innen:
- eine Außenschicht aus zumindest einem Polymer aus der Gruppe "Polyamid, Polyolefin",
- eine erste Trägerschicht aus Polyamid,
- eine Sperrschicht aus zumindest einer Komponente aus der Gruppe "Ethylen-Vinylalkohol-Copolymer (EVOH), Fluorpolymer",
- eine zweite Trägerschicht aus Polyamid,
- eine Innenschicht aus einem thermoplastischen Polyurethan (TPU),
wobei die Gesamtschichtdicke der Rohrleitung 0,7 bis 2,5 mm, vorzugsweise 0,8 bis 2 mm und bevorzugt 0,85 bis 1,8 mm beträgt. Ganz besonders bevorzugt ist eine Gesamtschichtdicke der Rohrleitung zwischen 0,85 und 1,7 mm.

Gemäß einer empfohlenen Ausführungsform der Erfindung besteht die Außenschicht der Rohrleitung aus Polyamid 12 bzw. im Wesentlichen aus Polyamid 12. Eine andere empfohlene Ausführungsform der Erfindung ist dadurch gekennzeichnet, dass die Außenschicht aus Polyethylen bzw. im Wesentlichen aus Polyethylen besteht. Dabei ist es besonders bevorzugt, dass die Außenschicht aus HDPE bzw. im Wesentlichen aus HDPE besteht. - Es empfiehlt sich, dass die Dicke der Außenschicht 5 % bis 60 %, vorzugsweise 7 % bis 45 % und bevorzugt 10 % bis 40 % der Gesamtwanddicke der Rohrleitung beträgt. Es liegt dabei im Rahmen der Erfindung, dass die Dicke der Außenschicht maximal 0,4 mm beträgt und bevorzugt im Bereich zwischen 0,1 und 0,4 mm, sehr bevorzugt im Bereich zwischen 0,2 und 0,4 mm liegt.

Eine besondere empfohlene Ausführungsform der Erfindung ist dadurch gekennzeichnet, dass zwischen der Außenschicht und der ersten Trägerschicht zumindest eine Haftvermittlerschicht und vorzugsweise eine Haftvermittlerschicht zwischengeschaltet ist. Vorzugsweise wird eine Haftvermittlerschicht auf Basis von Polyamid oder auf Basis eines Polyolefins eingesetzt. Wenn eine Haftvermittlerschicht auf Basis von Polyamid verwendet wird, handelt es sich empfohlenermaßen um ein modifiziertes Polyamid, vorzugsweise um ein modifiziertes Polyamid auf Basis von Polyamid 612. - Wenn eine Haftvermittlerschicht auf Basis eines Polyolefins eingesetzt wird, handelt es sich vorzugsweise um ein mit einem Carbonsäurederivat, bevorzugt mit einem Maleinsäurederivat und sehr bevorzugt um ein mit Maleinsäureanhydrid modifiziertes Polyolefin, insbesondere Polyethylen. - Zweckmäßigerweise beträgt die Dicke der Haftvermittlerschicht 3 % bis 30 %, vorzugsweise 5 % bis 20 % und bevorzugt 5 % bis 15 % der Gesamtwanddicke der Rohrleitung. Die Dicke der Haftvermittlerschicht beträgt zweckmäßigerweise 0,03 bis 0,15 mm und vorzugsweise 0,03 bis 0,1 mm.

Eine sehr empfohlene Ausführungsform der Erfindung ist dadurch gekennzeichnet, dass die erste Trägerschicht aus Polyamid 6 bzw. im Wesentlichen aus Polyamid 6 besteht. Grundsätzlich kann die erste Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen. - Es liegt im Rahmen der Erfindung, dass die Dicke der ersten Trägerschicht 5 % bis 70 %, vorzugsweise 10 % bis 60 % und bevorzugt 15 % bis 60 % der Gesamtwanddicke der Rohrleitung beträgt. Zweckmäßigerweise ist die Dicke der ersten Trägerschicht mindestens doppelt so dick und bevorzugt mindestens 3-mal so dick wie die Dicke der Haftvermittlerschicht. Es empfiehlt sich, dass die Dicke der ersten Trägerschicht 0,1 bis 0,8 mm, vorzugsweise 0,1 bis 0,75 mm und bevorzugt 0,2 bis 0,6 mm beträgt. Nach bewährter Ausführungsform der Erfindung ist die erste Trägerschicht dicker als die Sperrschicht und vorzugsweise mindestens doppelt so dick wie die Sperrschicht. Nach einer Ausführungsvariante der Erfindung ist die erste Trägerschicht mindestens 2,5-mal so dick wie die Sperrschicht. Es liegt im Rahmen der Erfindung, dass die erste Trägerschicht dicker ist als die Außenschicht und empfohlermaßen mindestens 1,5-mal dicker ist als die Außenschicht.

Eine Ausführungsform, der im Rahmen der Erfindung besondere Bedeutung zukommt, ist dadurch gekennzeichnet, dass die Sperrschicht aus Ethylen-Vinylalkohol-Copolymer (EVOH) bzw. im Wesentlichen aus EVOH besteht. Dieses Material hat sich in Kombination mit den weiteren erfindungsgemäßen Schichten ganz besonders als Sperrschicht bewährt. - Es liegt im Rahmen der Erfindung, dass die Dicke der Sperrschicht 5 % bis 50 %, vorzugsweise 5 % bis 45 % und bevorzugt 10 % bis 40 % der Gesamtwanddicke der Rohrleitung beträgt. Zweckmäßigerweise beträgt die Dicke der Sperrschicht 0,05 bis 0,4 mm, vorzugsweise 0,05 bis 0,3 mm und bevorzugt 0,75 bis 0,25 mm.

Eine besonders bevorzugte Ausführungsform der Erfindung ist dadurch gekennzeichnet, dass die zweite Trägerschicht aus Polyamid 6 bzw. im Wesentlichen aus Polyamid 6 besteht. Grundsätzlich kann die zweite Trägerschicht auch aus zumindest einem bzw. aus einem Polyamid aus der Gruppe "Polyamid 612, Polyamid 12, Polyamid 10, Polyamid 11, Co-Polyamid 6/6.6, Co-Polyamid 6/12" bestehen bzw. im Wesentlichen bestehen.- Es liegt im Rahmen der Erfindung, dass die Dicke der zweiten Trägerschicht 5 % bis 70 %, vorzugsweise 10 % bis 60 % und bevorzugt 15 % bis 60 % sowie sehr bevorzugt 15 % bis 55 % der Gesamtwanddicke der Rohrleitung beträgt. Zweckmäßigerweise beträgt die Dicke der zweiten Trägerschicht 0,1 bis 0,8 mm, vorzugsweise 0,1 bis 0,75 mm und bevorzugt 0,2 bis 0,6 mm. Es empfiehlt sich, dass die zweite Trägerschicht dicker ist als die Sperrschicht und bevorzugt mindestens doppelt so dick ist wie die Sperrschicht. Gemäß einer Ausführungsvariante der Erfindung ist die zweite Trägerschicht mindestens 2,5-mal so dick wie die Sperrschicht. Weiterhin liegt es im Rahmen der Erfindung, dass die zweite Trägerschicht dicker ist als die Außenschicht und vorzugsweise mindestens 1,5-mal dicker ist als die Außenschicht.

Erfindungsgemäß besteht die Innenschicht aus einem thermoplastischen Polyurethan (TPU). Dieser Werkstoff hat sich im Hinblick auf die Lösung des technischen Problems besonders bewährt. Diese Innenschicht wirkt gegenüber den Komponenten des die Rohrleitung durchströmenden Kraftstoffes bzw. Kraftstoffdampfes gleichsam als Sperrschicht und zeichnet sich durch eine sehr geringe Auswaschung von Schichtkomponenten aus. - Es liegt im Rahmen der Erfindung, dass die Dicke der Innenschicht 5 % bis 55 %, vorzugsweise 7 % bis 50 % und bevorzugt 10 % bis 40 % der Gesamtwanddicke der Rohrleitung beträgt. Zweckmäßigerweise beträgt die Dicke der Innenschicht 0,05 bis 0,45 mm, vorzugsweise 0,05 bis 0,4 mm und bevorzugt 0,1 bis 0,35 mm. Es liegt im Rahmen der Erfindung, dass die Dicke der Innenschicht geringer ist als die Dicke der ersten Trägerschicht und/oder die Dicke der zweiten Trägerschicht. Gemäß einer Ausführungsvariante der Erfindung wird die Innenschicht als elektrisch leitfähige Schicht eingerichtet und dazu mit Leitfähigkeitszusätzen versehen.

Eine besonders empfohlene Ausführungsform der Erfindung zeichnet sich dadurch aus, dass die erste Trägerschicht und/oder die zweite Trägerschicht eine größere Dicke aufweist als die Sperrschicht. Dabei ist die erste Trägerschicht und/oder die zweite Trägerschicht zweckmäßigerweise mindestens 1,2-mal, vorzugsweise mindestens 1,5-mal und bevorzugt mindestens 1,8-mal dicker als die Sperrschicht. - Gemäß sehr bevorzugter Ausführungsform der Erfindung weist die erste Trägerschicht und/oder die zweite Trägerschicht eine größere Dicke auf als die Innenschicht. Zweckmäßigerweise ist dabei die erste Trägerschicht und/oder die zweite Trägerschicht mindestens 1,2-mal und vorzugsweise mindestens 1,4-mal sowie bevorzugt mindestens 1,5-mal dicker als die Innenschicht. - Es liegt im Rahmen der Erfindung, dass die Außenschicht eine größere Dicke aufweist als die Sperrschicht. Vorzugsweise ist die Außenschicht mindestens 1,1-mal und bevorzugt mindestens 1,2-mal dicker als die Sperrschicht. - Gemäß empfohlener Ausführungsform der Erfindung ist die erste Trägerschicht und/oder die zweite Trägerschicht dicker als die Außenschicht. Vorzugsweise ist die erste Trägerschicht und/oder die zweite Trägerschicht mindestens 1,2-mal und bevorzugt mindestens 1,3-mal dicker als die Außenschicht.

Es liegt im Rahmen der Erfindung, dass die Außenschicht einen optimalen Schutz gegen Umwelteinflüsse gewährleistet. Zum Einen ist sie korrosionsbeständig bzw. chemisch resistent gegenüber Spritzwasser, insbesondere Salzwasser sowie chemisch resistent gegenüber Öl und Kraftstoff. Die beiden Trägerschichten gewährleisten insbesondere die mechanische Stabilität der erfindungsgemäßen Rohrleitung. Die Innenschicht hat wie die Sperrschicht eine Sperrwirkung und zwar insbesondere gegenüber den Komponenten des durch die Rohrleitung strömenden Kraftstoffes bzw. Kraftstoffdampfes.

Gemäß bevorzugter Ausführungsform der Erfindung wird die erfindungsgemäße Kraftfahrzeug-Rohrleitung durch Extrusion bzw. Koextrusion der Schichten hergestellt. Mit den erfindungsgemäßen Schichtkomponenten ist eine sehr einfache Koextrusion möglich und vor allem ist die Koextrusion bei moderaten Temperaturen durchführbar. - Die erfindungsgemäße Rohrleitung kann im Übrigen als glattes unprofiliertes Rohr oder auch als Wellrohr ausgebildet werden.

Der Erfindung liegt die Erkenntnis zugrunde, dass die erfindungsgemäße Kraftfahrzeug-Rohrleitung eine ausgezeichnete chemische Resistenz aufweist und vor allem gegenüber Auswaschungen von Schichtkomponenten resistent ist. Das gilt vor allem für die Innenschicht aber auch für die angrenzenden Schichten. Die erfindungsgemäße Rohrleitung weist optimale Barriereeigenschaften sowie eine sehr gute Kraftstoff- und Alterungsbeständigkeit auf. Von besonderem Vorteil ist dabei, dass ein und dieselbe erfindungsgemäße Rohrleitung für verschiedene Kraftstoffe eingesetzt werden kann und gegenüber diesen verschiedenen Kraftstoffen die vorgenannten Vorteile bietet. Hervorzuheben ist, dass die erfindungsgemäße Rohrleitung neben der erläuterten chemischen Resistenz auch eine ausgezeichnete mechanische Widerstandsfähigkeit aufweist. Fernerhin zeichnet sich die erfindungsgemäße Rohrleitung durch eine optimale thermische Resistenz aus und die Rohrleitung kann problemlos in einem Temperaturbereich zwischen -40°C und 140°C eingesetzt werden. Gegenüber vielen bislang bekannten Rohrleitungen ist die erfindungsgemäße Rohrleitung fernerhin sehr kostengünstig bzw. aus sehr kostengünstigen Materialien herstellbar. Zu betonen ist fernerhin, dass sich die Materialien der Schichten der erfindungsgemäßen Rohrleitung sehr einfach verarbeiten lassen und vor allem eine einfache und problemlose Koextrusion der erfindungsgemäßen Schichtenfolge möglich ist.

Nachfolgend wird die Erfindung anhand von Ausführungsbeispielen näher erläutert:
Gemäß einem ersten Ausführungsbeispiel besteht die Außenschicht der erfindungsgemäßen Rohrleitung aus Polyamid 12 bzw. im Wesentlichen aus Polyamid 12 und diese Außenschicht hat empfohlenermaßen eine Dicke von 0,15 bis 0,35 mm. An die Außenschicht schließt vorzugsweise innenseitig unmittelbar eine Haftvermittlerschicht an, die bevorzugt aus einem mit Maleinsäureanhydrid modifizierten Polyamid, insbesondere Polyamid 612 besteht. Die Haftvermittlerschicht weist zweckmäßigerweise eine Dicke von 0,03 bis 0,1 mm auf. Unmittelbar an diese Haftvermittlerschicht schließt innenseitig die erste Trägerschicht an, die aus Polyamid 6 bzw. im Wesentlichen aus Polyamid 6 besteht. Sie weist bevorzugt eine Schichtdicke von 0,2 bis 0,75 mm auf. Innenseitig an die erste Trägerschicht schließt unmittelbar die Sperrschicht an, die aus EVOH bzw. im Wesentlichen aus EVOH besteht und vorzugsweise eine Schichtdicke von 0,05 bis 0,3 mm aufweist. An die Sperrschicht schließt innenseitig unmittelbar die zweite Trägerschicht an, die aus Polyamid 6 bzw. im Wesentlichen aus Polyamid 6 besteht und empfohlenermaßen eine Schichtdicke von 0,2 bis 0,75 mm aufweist. Innenseitig an die zweite Trägerschicht schließt die Innenschicht an, die aus TPU bzw. im Wesentlichen aus TPU besteht und bevorzugt eine Schichtdicke von 0,05 bis 0,4 mm aufweist. Die Gesamtwandstärke dieser Rohrleitung liegt vorzugsweise im Bereich zwischen 0,7 und 2 mm.

Nach einer zweiten Ausführungsform der Erfindung besteht die Außenschicht aus HDPE bzw im Wesentlichen aus HDPE und weist zweckmäßigerweise eine Schichtdicke von 0,2 bis 0,4 mm auf. Innenseitig an die Außenschicht schließt nach bevorzugter Ausführungsform unmittelbar eine Haftvermittlerschicht an, die vorzugsweise aus einem mit Maleinsäureanhydrid modifizierten Polyolefin besteht bzw. im Wesentlichen besteht und bevorzugt eine Schichtdicke von 0,03 mm bis 0,1 mm aufweist. Unmittelbar an die Haftvermittlerschicht schließt innenseitig die erste Trägerschicht an, die aus Polyamid 6 bzw. im Wesentlichen aus Polyamid 6 besteht und empfohlenermaßen eine Schichtdicke von 0,2 mm bis 0,75 mm aufweist. Innenseitig an die erste Trägerschicht schließt unmittelbar die Sperrschicht an, die aus EVOH bzw. im Wesentlichen aus EVOH besteht und bevorzugt eine Schichtdicke von 0,05 bis 0,3 mm aufweist. Unmittelbar an die Sperrschicht schließt innenseitig die zweite Trägerschicht an, die aus Polyamid 6 bzw. im Wesentlichen aus Polyamid 6 besteht und vorzugsweise eine Schichtdicke zwischen 0,2 und 0,75 mm aufweist. Unmittelbar an die zweite Trägerschicht schließt innenseitig die Innenschicht an, die aus TPU bzw. im Wesentlichen aus TPU besteht und bevorzugt eine Schichtdicke von 0,1 bis 0,4 mm aufweist. Die Gesamtwandstärke dieser Rohrleitung liegt zweckmäßigerweise zwischen 0,8 und 2 mm.

Nachfolgend wird die Erfindung anhand einer lediglich ein Ausführungsbeispiel darstellenden Zeichnung näher erläutert. Es zeigen in schematischer Darstellung:

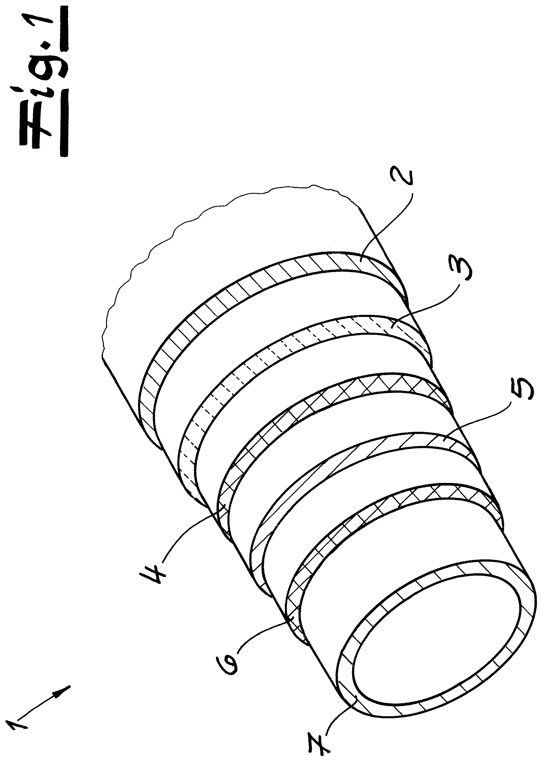

- **Fig. 1**: eine perspektivische Ansicht einer erfindungsgemäßen Rohrleitung und

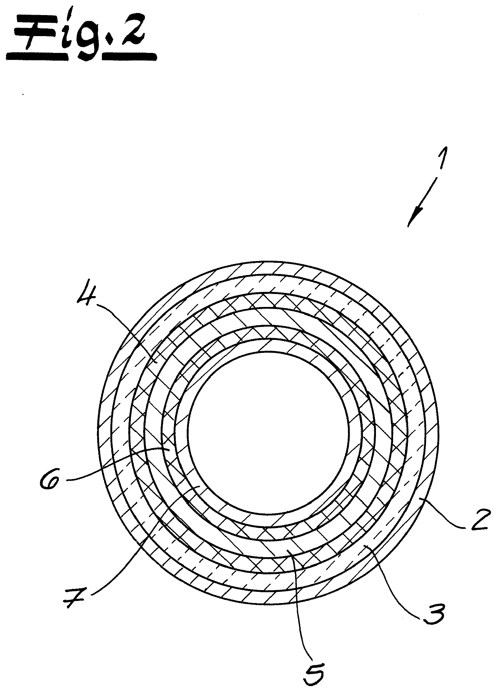

- **Fig. 2**: einen Schnitt durch den Gegenstand gemäß Fig. 1.

Im Ausführungsbeispiel nach den Figuren weist die erfindungsgemäße Rohrleitung 1 eine Außenschicht 2 auf, die aus Polyamid 12 bzw. im Wesentlichen aus Polyamid 12 besteht und bevorzugt eine Schichtdicke zwischen 0,2 und 0,4 mm aufweist. An diese Außenschicht 2 schließt innenseitig eine Haftvermittlerschicht 3 an, die vorzugsweise und im Ausführungsbeispiel aus mit Maleinsäureanhydrid mofifiziertem Polyamid 612 besteht. Daran schließt innenseitig die erste Trägerschicht 4 an, die bevorzugt und im Ausführungsbeispiel aus Polyamid 6 bzw. im Wesentlichen aus Polyamid 6 besteht und zweckmäßigerweise eine Schichtdicke zwischen 0,2 und 0,75 mm aufweist. Innenseitig an diese erste Trägerschicht 4 schließt die Sperrschicht 5 an, die bevorzugt und im Ausführungsbeispiel aus EVOH bzw. im Wesentlichen aus EVOH besteht und empfohlenermaßen eine Schichtdicke zwischen 0,1 und 0,3 mm aufweist. An diese Sperrschicht 5 schließt innnenseitig die zweite Trägerschicht 6 an, die aus Polyamid 6 bzw. im Wesentlichen aus Polyamid 6 besteht und bevorzugt eine Schichtdicke zwischen 0,2 und 0,75 mm aufweist. Innenseitig an die zweite Trägerschicht 6 schließt die Innenschicht 7 an, die aus TPU bzw. im Wesentlichen aus TPU besteht und vorzugsweise eine Schichtdicke zwischen 0,1 und 0,4 mm aufweist. Die in den Figuren dargestellte mehrschichtige Kraftfahrzeug-Rohrleitung 1 wurde durch Koextrusion hergestellt. Es liegt im Rahmen der Erfindung, dass die Innenschicht 7 mit Leifähigkeitszusätzen versehen werden kann.

## Patentansprüche

1. Mehrschichtige Kraftfahrzeug-Rohrleitung (1), insbesondere zur Durchleitung von Kraftstoffen, wobei die Rohrleitung (1) zumindest fünf Schichten aufweist und zwar mit folgendem Schichtaufbau von außen nach innen:
- eine Außenschicht (2) aus zumindest einem Polymer aus der Gruppe "Polyamid, Polyolefin",
- eine erste Trägerschicht (4) aus Polyamid,
- eine Sperrschicht (5) aus zumindest einer Komponente aus der Gruppe "EVOH, Fluorpolymer",
- eine zweite Trägerschicht (6) aus Polyamid,
- eine Innenschicht (7) aus einem thermoplastischen Polyurethan (TPU),
wobei die Gesamtschichtdicke der Rohrleitung (1) 0,7 bis 2,5 mm, vorzugsweise 0,8 bis 2 mm und bevorzugt 0,85 bis 1,8 mm beträgt.

2. Rohrleitung nach Anspruch 1, wobei die Außenschicht (2) aus Polyamid 12 bzw. im Wesentlichen aus Polyamid 12 besteht.

3. Rohrleitung nach Anspruch 1, wobei die Außenschicht aus Polyethylen, insbesondere aus HDPE besteht bzw. im Wesentlichen aus Polyethylen, insbesondere im Wesentlichen aus HDPE besteht.

4. Rohrleitung nach einem der Ansprüche 1 bis 3, wobei die Dicke der Außenschicht 5 % bis 60 %, vorzugsweise 7 % bis 45 % der Gesamtwanddicke der Rohrleitung (1) beträgt,

5. Rohrleitung nach einem der Ansprüche 1 bis 4, wobei zwischen der Außenschicht (2) und der ersten Trägerschicht (4) zumindest eine Haftvermittlerschicht (3), vorzugsweise eine Haftvermittlerschicht (3) zwischengeschaltet ist.

6. Rohrleitung nach Anspruch 5, wobei die Dicke der Haftvermittlerschicht (3) 3 % bis 30 %, bevorzugt 5 % bis 20 % der Gesamtwanddicke der Rohrleitung (1) beträgt.

7. Rohrleitung nach einem der Ansprüche 1 bis 6, wobei die erste Trägerschicht (4) aus Polyamid 6 bzw. im Wesentlichen aus Polyamid 6 besteht.

8. Rohrleitung nach einem der Ansprüche 1 bis 6, wobei die erste Trägerschicht (4) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

9. Rohrleitung nach einem der Ansprüche 1 bis 8, wobei die Dicke der ersten Trägerschicht (4) 5 % bis 70 %, vorzugsweise 10 % bis 60 % und bevorzugt 15 % bis 60 % der Gesamtwanddicke der Rohrleitung (1) beträgt.

10. Rohrleitung nach einem der Ansprüche 1 bis 9, wobei die Dicke der Sperrschicht (5) 5 % bis 50 %, bevorzugt 10 % bis 40 % der Gesamtwanddicke der Rohrleitung (1) beträgt.

11. Rohrleitung nach einem der Ansprüche 1 bis 10, wobei die zweite Trägerschicht (6) aus Polyamid 6 bzw. im Wesentlichen aus Polyamid 6 besteht.

12. Rohrleitung nach einem der Ansprüche 1 bis 10, wobei die zweite Trägerschicht (6) aus zumindest einem bzw. einem Polyamid aus der Gruppe "Polyamid 612, Polyamid 12, Polyamid 10, Polyamid 11, Co-Polyamid 6/6.6, Co-Polyamid 6/12" besteht bzw. im Wesentlichen besteht.

13. Rohrleitung nach einem der Ansprüche 1 bis 12, wobei die Dicke der zweiten Trägerschicht (6) 5 % bis 70 %, vorzugsweise 10 % bis 60 % und bevorzugt 15 % bis 60 % der Gesamtwanddicke der Rohrleitung (1) beträgt.

14. Rohrleitung nach einem der Ansprüche 1 bis 13, wobei die Dicke der Innenschicht 5 % bis 55 %, vorzugsweise 7 % bis 50 % und bevorzugt 10 % bis 40 % der Gesamtwanddicke der Rohrleitung (1) beträgt.

15. Rohrleitung nach einem der Ansprüche 1 bis 14, wobei die erste Trägerschicht (4) und/oder die zweite Trägerschicht (6) eine größere Dicke aufweist/aufweisen als die Sperrschicht (5).

16. Rohrleitung nach einem der Ansprüche 1 bis 15, wobei die erste Trägerschicht (4) und/oder die zweite Trägerschicht (6) eine größere Dicke aufweist/aufweisen als die Innenschicht (7).

17. Rohrleitung nach einem der Ansprüche 1 bis 16, wobei die Dicke der Außenschicht (2) eine größere Dicke aufweist als die Sperrschicht (5).

## Claims

1. A multilayer motor vehicle pipeline (1), in particular for conducting fuels, wherein the pipeline (1) has at least five layers, specifically with the following layer structure from the outside in:
- an outer layer (2) comprised of at least one polymer from the "polyamide, polyolefin" group,
- a first carrier layer (4) comprised of polyamide,
- a barrier layer (5) comprised of at least one component from the "EVOH, fluoropolymer" group,
- a second carrier layer (6) comprised of polyamide,
- an inner layer (7) comprised of a thermoplastic polyurethane (TPU),
wherein the overall layer thickness of the pipeline (1) measures 0.7 to 2.5 mm, preferably 0.8 to 2 mm, and primarily 0.85 to 1.8 mm.

2. The pipeline according to claim 1, wherein the outer layer (2) consists of polyamide 12 or essentially of polyamide 12.

3. The pipeline according to claim 1, wherein the outer layer consists of polyethylene, in particular of HDPE, or essentially of polyethylene, in particular essentially of HDPE.

4. The pipeline according to one of claims 1 to 3, wherein the thickness of the outer layer measures 5 % to 60 %, preferably 7 % to 45 % of the overall wall thickness of the pipeline (1).

5. The pipeline according to one of claims 1 to 4, wherein at least one adhesion promoting layer (3), preferably one adhesion promoting layer (3), is interspersed between the outer layer (2) and the first carrier layer (4) .

6. The pipeline according to claim 5, wherein the thickness of the adhesion promoting layer (3) measures 3 % to 30 %, primarily 5 % to 20 %, of the overall wall thickness of the pipeline (1).

7. The pipeline according to one of claims 1 to 6, wherein the first carrier layer (4) consists of polyamide 6 or essentially of polyamide 6.

8. The pipeline according to one of claims 1 to 6, wherein the first carrier layer (4) consists or essentially consists of a polyamide from the "polyamide 612, polyamide 12, polyamide 10, polyamide 11, co-polyamide 6/6.6, co-polyamide 6/12" group.

9. The pipeline according to one of claims 1 to 8, wherein the thickness of the first carrier layer (4) measures 5 % to 70 %, preferably 10 % to 60 %, and primarily 15 % to 60 % of the overall thickness of the pipeline (1) .

10. The pipeline according to one of claims 1 to 9, wherein the thickness of the barrier layer (5) measures 5 % to 50 %, primarily 10 % to 40 % of the overall wall thickness of the pipeline (1).

11. The pipeline according to one of claims 1 to 10, wherein the second carrier layer (6) consists of polyamide 6 or essentially of polyamide 6.

12. The pipeline according to one of claims 1 to 10, wherein the second carrier layer (6) consists or essentially consists of at least one polyamide from the "polyamide 612, polyamide 12, polyamide 10, polyamide 11, co-polyamide 6/6.6, co-polyamide 6/12" group.

13. The pipeline according to one of claims 1 to 12, wherein the thickness of the second carrier layer (6) measures 5 % to 70 %, preferably 10 % to 60 %, and primarily 15 % to 60 % of the overall wall thickness of the pipeline (1).

14. The pipeline according to one of claims 1 to 13, wherein the thickness of the inner layer measures 5 % to 55 %, preferably 7 % to 50 %, and primarily 10 % to 40 % of the overall wall thickness of the pipeline (1).

15. The pipeline according to one of claims 1 to 14, wherein the first carrier layer (4) and/or the second carrier layer (6) has a larger thickness than the carrier layer (5) .

16. The pipeline according to one of claims 1 to 15, wherein the first carrier layer (4) and/or the second carrier layer (6) has a larger thickness than the inner layer (7) .

17. The pipeline according to one of claims 1 to 16, wherein the thickness of the outer layer (2) has a larger thickness than the barrier layer (5).

## Revendications

1. Conduite de véhicule automobile multicouches (1), en particulier pour le passage de carburants, sachant que la conduite (1) comporte au moins cinq couches, à vrai dire avec la structure de couches suivante de l'extérieur vers l'intérieur :
- une couche extérieure (2) d'au moins un polymère du groupe « Polyamide, Polyoléfine »,
- une première couche de support (4) en polyamide,
- une couche de protection (5) d'au moins un composant du groupe « Copolymère d'éthylène alcool vinylique (CEAV) »,
- une deuxième couche de support (6) en polyamide,
- une couche intérieure (7) d'un polyuréthane thermoplastique (PUT),
sachant que l'épaisseur de couche totale de la conduite (1) est de 0,7 à 2,5 mm, de préférence de 0,8 à 2 mm et de préférence encore de 0,85 à 1,8 mm.

2. Conduite selon la revendication 1, sachant que la couche extérieure (2) est composée de polyamide 12 ou pour l'essentiel de polyamide 12.

3. Conduite selon la revendication 1, sachant que la couche extérieure est composée de polyéthylène, en particulier de polyéthylène de haute densité (PEHD) ou pour l'essentiel de polyéthylène, en particulier pour l'essentiel de PEHD.

4. Conduite selon l'une quelconque des revendications 1 à 3, sachant que l'épaisseur de la couche extérieure est de 5 % à 60 %, de préférence 7 % à 45 % de l'épaisseur de paroi totale de la conduite (1).

5. Conduite selon l'une quelconque des revendications 1 à 4, sachant qu'au moins une couche d'agent adhésif (3), de préférence une couche d'agent adhésif (3), est intercalée entre la couche extérieure (2) et la première couche de support (4).

6. Conduite selon la revendication 5, sachant que l'épaisseur de la couche d'agent adhésif (3) représente 3 % à 30 %, de préférence 5 % à 20 % de l'épaisseur de paroi totale de la conduite (1).

7. Conduite selon l'une quelconque des revendications 1 à 6, sachant que la couche de support (4) est composée de Polyamide 6, pour l'essentiel de Polyamide 6.

8. Conduite selon l'une quelconque des revendications 1 à 6, sachant que la première couche de support (4) est composée ou est composé pour l'essentiel d'au moins un ou d'un polyamide du groupe « Polyamide 612, Polyamide 12, Polyamide 10, Polyamide 11, Co-polyamide 6/6.6, Co-polyamide 6/12 ».

9. Conduite selon l'une quelconque des revendications 1 à 8, sachant que l'épaisseur de la première couche de support (4) représente 5 % à 70 %, de préférence 10 % à 60 % et de préférence encore 15 % à 60 % de l'épaisseur de paroi totale de la conduite (1).

10. Conduite selon l'une quelconque des revendications 1 à 9, sachant que l'épaisseur de la couche de protection (5) représente 5 % à 50 %, de préférence 10 % à 40 % de l'épaisseur de paroi totale de la conduite (1).

11. Conduite selon l'une quelconque des revendications 1 à 10, sachant que la deuxième couche de support (6) est composée de Polyamide 6 ou pour l'essentiel de Polyamide 6.

12. Conduite selon l'une quelconque des revendications 1 à 10, sachant que la deuxième couche de support (6) est composée ou pour l'essentiel composé d'au moins un ou d'un polyamide du groupe « Polyamide 612, Polyamide 12, Polyamide 10, Polyamide 11, Co-polyamide 6/6.6, Co-polyamide 6/12 ».

13. Conduite selon l'une quelconque des revendications 1 à 12, sachant que l'épaisseur de la deuxième couche de support (6) représente 5 % à 70 %, de préférence 10 % à 60 % et de préférence encore 15 % à 60 % de l'épaisseur de paroi totale de la conduite (1).

14. Conduite selon l'une quelconque des revendications 1 à 13, sachant que l'épaisseur de la couche intérieure représente 5 % à 55 %, de préférence 7 % à 50 % et de préférence encore 10 % à 40 % de l'épaisseur de paroi totale de la conduite (1).

15. Conduite selon l'une quelconque des revendications 1 à 14, sachant que la première couche de support (4) et/ou la deuxième couche de support (6) comporte/comportent une épaisseur plus grande que la couche de protection (5) .

16. Conduite selon l'une quelconque des revendications 1 à 15, sachant que la première couche de support (4) et/ou la deuxième couche de support (6) comporte/comportent une épaisseur plus grande que la couche intérieure (7).

17. Conduite selon l'une quelconque des revendications 1 à 16, sachant que l'épaisseur de la couche extérieure (2) comporte une épaisseur plus grande que la couche de protection (5).
